# EUROPEAN PATENT APPLICATION

(11) **EP 2 819 100 A1**
(43) Date of publication of application: **31.12.2014**
(21) Application number: 13173877.5
(22) Date of filing: 26.06.2013
(51) Int. Cl.: G06T 19/00

(54) **Displaying augmented reality images in an aircraft during flight**

(71) Applicant: Airbus Operations GmbH, 21129 Hamburg (DE)
(72) Inventor: Klettke, Marcus, 28357 Bremen (DE)
(74) Representative: Maiwald Patentanwalts GmbH

(57) **Abstract**

A method for displaying augmented reality images (48) on a portable device (12) in an aircraft (14) comprises the steps of: capturing a camera image (50) with a camera (18) of the portable device (12); determining a position of the portable device (12) relative to the aircraft (14) based on a sensor (18, 26) of the portable device (12); generating an overlay image (52) based on the position of the portable device (12), wherein the overlay image shows a model (70, 72) of an occluded structure associated with the aircraft (14) and overlaying the camera image (50) with the overlay image (52), such that the model (70, 72) of the occluded structure is overlaying a visible structure (56, 62) of the aircraft (14) displayed in the camera image (50); displaying the camera image (50) with the overlay image (52) on a screen (16) of the portable device (12).

## Description

### Field of the invention

The invention relates to a method, a computer program and a computer-readable medium for displaying augmented reality images on a portable device in an aircraft. The invention also relates to a portable and to a system of an aircraft and a portable device.

### Background of the invention

To enhance the well-being of passengers, passengers may be entertained during flights with movies and audios. With the rising usage of portable and wireless devices like smartphones, airlines may also offer other entertainment possibilities to their passengers. For example, during flight, passengers may connect to a wireless communication network that is provided in the aircraft and may execute dedicated applications provided by the airline.

For example, there are applications for an in-flight portal for bookings (Taxi, Hotel) and special deals at their destination. There may be a connection to the Internet via the aircraft and passengers may, for example, read their e-mails or may update their social network accounts during flight.

There are technical related passengers that are additionally interested in the technology of flying. However, most of the technology of an aircraft is covered and invisible for passengers during flight.

Augmented reality is used for visualizing technical aspects of an aircraft during construction. For example, DE 10 2009 058 802 A1 and US 2012 0 303 336 A2 relate to the usage of augmented reality for comparing a real and a virtual model during construction of an aircraft.

### Summary of the invention

It may be seen as an object of the invention to enhance the well-being of passengers of an aircraft. Other objects of the invention may be to display technical aspects of an aircraft to passengers during flight and/or to facilitate the stay of passengers in an aircraft.

These objects are achieved by the subject-matter of the independent claims. Further exemplary embodiments are evident from the dependent claims and the following description.

An aspect of the invention relates to a method for displaying augmented reality images on a portable/mobile device in an aircraft. Augmented reality may be defined by a captured image of some "real" structure overlaid with an artificial image of some "imaginary/virtual" computer-generated structure. An aircraft may be an airplane, in particular an airplane carrying passengers.

According to an embodiment of the invention, the method comprises the steps of: capturing a camera image with a camera of the portable device; determining a position of the portable device relative to the aircraft based on data of a sensor of the portable device; generating an overlay image based on the position of the portable device, wherein the overlay shows a model of an occluded structure associated with the aircraft; overlaying the camera image with the overlay image, such that the model of the occluded structure is overlaying a visible structure of the aircraft displayed in the camera image; and displaying the camera image with the overlay image on a screen of the portable device.

Summarized, the portable device is adapted for overlaying an image captured with its own camera with a computer-generated image that shows an interesting structure of the aircraft or in the surrounding of the aircraft that may be interesting for the user of the portable device but that is occluded by the lining, the floor and/or walls of the aircraft. For example, the interesting structure may be a part of the technical equipment of the aircraft. If the user/passenger holds his portable device in the direction of the lining, the portable device may show a model of the installations. If he holds the portable device down, the portable device may show a model of the cargo area. If he holds the portable device in the direction to the galley, he may see a model of the galley.

The position of the portable device may be determined from motion data of a motion sensor of the mobile device. A motion sensor may be any sensor that is adapted for detecting data relating to the movement of the portable device, for example a motion sensor may be a gyroscope, an acceleration sensor or a direction sensor.

The position of the portable device may define the location and/or the orientation of the portable device with respect to the aircraft. The position may be provided with respect to a local frame/coordinate system of the aircraft, for example with a three-dimensional location vector and a three-dimensional rotation.

A model of a structure associated with the aircraft may be provided with technical drawings and/or vector graphics added to the captured camera image. A model may be a computer-generated image/graphics that, for example, shows the outline of the structure and/or the main components of the structure.

According to an embodiment of the invention, the model of the occluded structure is moved and rotated such that it is displayed in the overlay image overlaying the real position of the occluded structure. For example, the model may be a three-dimensional wire-frame or triangulated model of the occluded structure. Based on the position of the portable device, the portable device may calculate the projection of the three-dimensional model onto the captured images.

According to an embodiment of the invention, the occluded structure is a technical equipment hidden behind the visible structure of the aircraft. The occluded structure may be at least one of: an installation behind a lining, a cargo bay, a tail of the aircraft, a turbine, a lavatory, a galley, a shower, a baby changing table, a cockpit. It has to be understood that also equipment that is only hidden from the point of view of the portable device (for example a baby changing table behind a curtain) may be seen as an occluded structure.

According to an embodiment of the invention, the method further comprises the step of: determining a position of the portable device relative to a landscape outside the aircraft (based on motion data of the portable device and/or motion data of the aircraft); wherein the displayed occluded structure is the landscape outside of the aircraft. For example, the portable device may receive the actual position of the aircraft (for example location, altitude, roll, pitch yaw) and may generate a model of the landscape outside (for example below) the aircraft, wherein also the position of the portable device is taken into account. The user of the portable device may hold the portable device down and may see a three-dimensional model of the mountains, the aircraft is flying over. When the user moves the portable device into another direction, he will see the model of the mountains that are located in this direction.

It is also possible that the mobile device shows a map of the landscape below the aircraft that shows towns, location names and other dedicated places like lakes, rivers and streets. For example, a user may activate the map, when he is interested in what he is seeing on the ground, for example the name of the town, river or mountain outside of the window.

A user/passenger may follow his flight on an interactive map. When he activates the corresponding application on the portable device, the portable device may connect to a wireless communication network, such as an in-flight broadband system. After that, the portable device may download the map and the location of the aircraft. If the user holds the portable device to the ground, he will see the map the aircraft is flying above. The map may be supplemented with tags, which may explain or advertise points on the map. The map may be zoomable.

According to an embodiment of the invention, the method further comprises the steps of: receiving aircraft related data via a wireless communication network of the aircraft; adding the aircraft related data as a tag to the model in the overlay image. A tag may be a (small) image near the model that is adapted for displaying information. For example a tag may contain writing, numbers, gauges or pictograms.

According to an embodiment of the invention, the aircraft data comprises at least one of: acceleration data of the aircraft, speed data of the aircraft, altitude data of the aircraft, position data of the aircraft, a thrust of a turbine, a position of a rudder. Such data may be displayed as interesting information additionally to the corresponding model. The aircraft data also may be used for generating the model of the corresponding structure. For example, the position of the model of the rudder may be changed according to the received position of the (real) rudder.

According to an embodiment of the invention, the aircraft data comprises at least one of: an occupation status of a lavatory, an occupation status of a baby changing table, an occupation status of a shower, servable meals of a galley. For example, the occupation status may be displayed next to the model as a pictogram. The wireless communication network may be connected with sensors providing the respective occupation status.

With the model, the tag and/or a link/button next to the model, a user of the portable device also may be directed to further information regarding the respective (real) structure on the portable device. For example, the user may book the shower. The user may see the menu next to the galley and may order a meal and/or a beverage. He also may see an on-board shopping list, and, for example may order a perfume to his seat.

The wireless communication network may be connected with an intranet of the aircraft and/or with the internet, which may provide pictures and contexts that may be displayed together with the tags. For example, when a user does not find a product in the on-board shop, he may be directed to an online shop having this product.

The wireless communication network may be connected with cameras of the aircraft (for example in the cockpit, an outside camera, etc.). The images of these cameras also may be displayed in the portable device.

According to an embodiment of the invention, the application providing the functionality of the portable device relating to the augmented reality method may be downloaded via the wireless communication network during or before the flight. Also the models displayed by the portable device may be downloaded via the wireless communication network.

According to an embodiment of the invention, the method further comprises the step of: in the case, more than one model is displayable in the overlay image by the portable device, presenting the possibility to display only one of the models by the portable device. For example, in a first step, the portable device only may provide buttons/links in the overlay image at the positions in the image, where a model, a tag and/or further information may be displayed. The user may then activate one or more of the buttons/links and the portable device will then display the corresponding model/tag and/or further information.

According to an embodiment of the invention, the method further comprises the step of: receiving motion data from the aircraft; considering motions induced by the aircraft for determining the position of the portable device. The motion sensor of the portable device may be influenced by the movement of the aircraft. For example, an acceleration sensor of the portable device usually will detect accelerations caused by the user and accelerations caused by the aircraft. However, accelerations caused by the aircraft usually will not change the position of the portable device relative to the aircraft. With motion data of the aircraft, the influence of the motion of the aircraft may be taken into account for determining the position of the portable device.

According to an embodiment of the invention, the method further comprises the step of: setting a reference position of the portable device based on a seat place of a person carrying the portable device. For example, the reference position may be set (manually or automatically) when the user of the portable device is at his seat. After the reference position has been set, the following positions of the portable device may be determined from the motion data of the motion sensor and/or of the aircraft. According to an embodiment of the invention, the method further comprises the step of: identifying a specific spot and/or pattern in the aircraft from the camera image; and determining the position of the portable device relative to the aircraft based on the specific spot. In other words, the camera of the portable device may be used as a position sensor of the portable device.

The specific spot may be a one- or two-dimensional bar code. Special bar codes may be attached to the interior of the aircraft and in particular to the passenger cabin. The bar code may be identified in the images captured by the portable device.

The specific spot may be a part of the interior design of the aircraft. For example, specific details of the interior of the aircraft may be detected by pattern recognition in the images captured by the portable device. For example, such specific spots may be a lavatory sign, an emergency door, etc.

From the orientation, the size and the position of the pattern of the specific spot in the image, the portable device may determine its position and orientation relative to the specific spot. From the data encoded in the bar code or from the recognized pattern, the portable device may determine the position of the specific spot and therefrom its position relative to the aircraft.

Another aspect of the invention relates to a computer program for displaying augmented reality images on a portable device in an aircraft, which computer program, when being executed by a processor, is adapted to carry out the steps of the method as described in the above and in the following. For example, the computer program or application may be downloaded to the portable device via the wireless communication network, when a passenger enters the aircraft or stays with the aircraft.

Another aspect of the invention relates to a computer-readable medium, in which such a computer program is stored. A computer-readable medium may be a nonvolatile medium like a floppy disk, a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, for example the Internet or the wireless network of an aircraft, which allows downloading the computer program.

Another aspect of the invention relates to a portable device adapted for displaying augmented reality images with the method as described in the above and in the following. Such a portable device may be a smartphone, an e-book reader or a tablet computer, in which the above mentioned computer program is installed. The portable device has a motion sensor for determining its position, a camera for capturing images of the interior of the aircraft, a communication interface for accessing the wireless communication network of the aircraft and a screen for displaying the overlaid captured image.

Another aspect of the invention relates to a system comprising an aircraft and a portable device as described in the above and in the following. The aircraft, for example a passenger airplane, comprises a wireless communication network and a computer for gathering aircraft related data from sensors of the aircraft and for sending the aircraft related data to the portable device via the wireless communication network.

According to an embodiment of the invention, the computer of the aircraft comprises a database with models of structures associated with the aircraft. For example, in the case the portable device generates an overlay image with a specific model, it may download the model from the database during the generation. However, it is also possible that the portable device downloads models of the aircraft, when the user of the portable device enters the aircraft or when the user commands the portable device to download the models.

It has to be understood that features of the method as described in the above and in the following may be features of the computer program, the computer-readable medium, the portable device and the system as described in the above and in the following (and vice versa).

These and other aspects of the invention will be apparent from and elucidated with reference to the embodiments described hereinafter.

### Brief description of the drawings

Below, embodiments of the present invention are described in more detail with reference to the attached drawings.
Fig. 1 schematically shows a system according to an embodiment of the invention.
Fig. 2 schematically shows an image displayed by a portable device according to an embodiment of the invention.
Fig. 3 shows a flow diagram with a method for displaying augmented reality images according to an embodiment of the invention.

In principle, identical parts are provided with the same reference symbols in the figures.

### Detailed description of embodiments

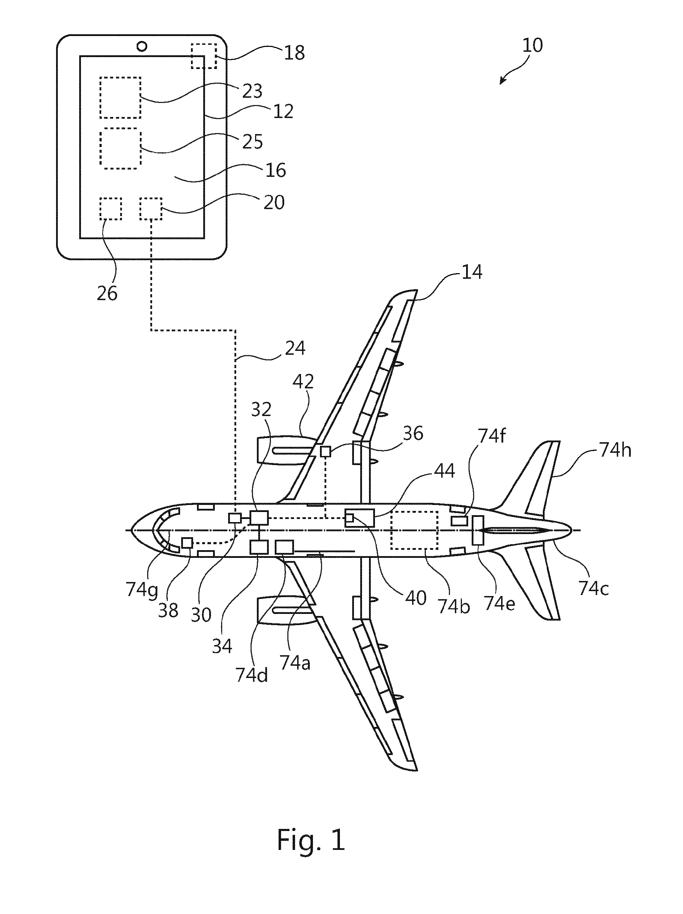

Fig. 1 shows a system 10 comprising a portable device 12 and an aircraft 14. The portable device 12 may be a smartphone, a tablet computer, an e-book reader or any device that may be used by a passenger of the aircraft 14 for communication and for consuming media.

Basically, the portable device 12 comprises a screen 16 (which may be a touch screen), a camera 18 and a communication interface 20 for a wireless network 22 of the aircraft 14. The portable device 12 is adapted to execute computer programs (applications, "apps") that, for example, may be downloaded via the communication interface 20 and stored in the portable device 12. To this end, the portable device 12 comprises a processor 23 for executing the programs. The processor 23 may be part of a control module 25 for controlling the screen 16, camera 18, interface 20 and further components of the portable device 12 as described in the following.

Furthermore, the portable device 12 comprises a motion sensor 26 (for example a gyroscope and/or an acceleration sensor) with which the portable device 12 may determine its orientation and location in space.

The aircraft 14 may be a passenger airplane, which also provides a communication interface 30 for the wireless communication network 24. The communication interface 30 is connected with a computer 32 of the aircraft that may be connected to or that may host a database 34, in which (among other data) programs for the portable device 12 may be stored.

The computer 32 may be adapted for gathering aircraft related data from sensors 36, 38, 40 of the aircraft 14, for example from a speed sensor 36 associated with a turbine 42 of the aircraft 14, a cockpit camera 38 or a door lock sensor 40 of a shower 44.

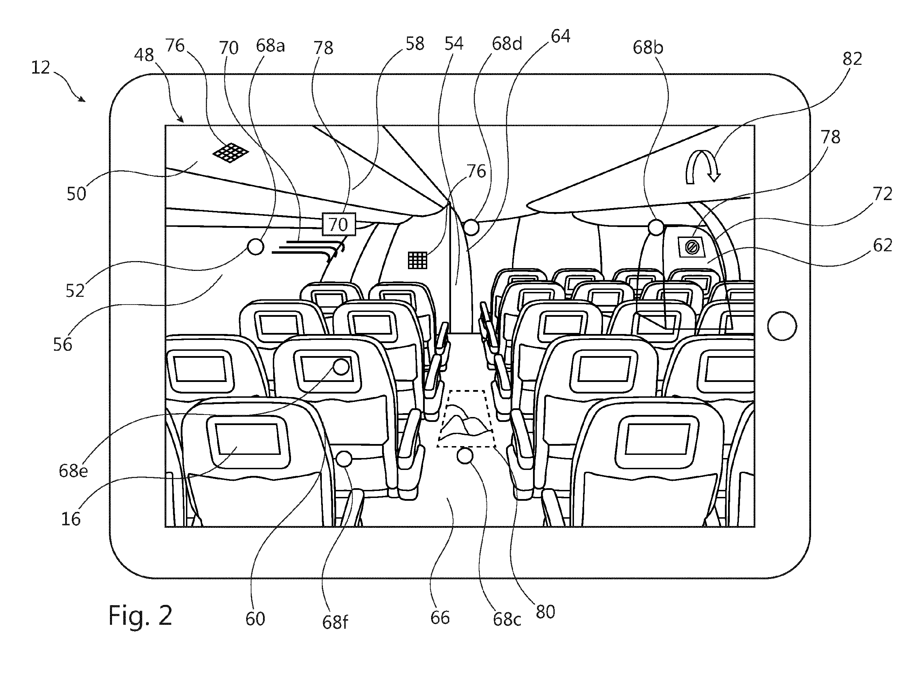

Fig. 2 shows the portable device 12 and in particular its screen 16 with an image 48 that has been generated from a camera image 50 of the camera 18 and an overlay image 52 that has been generated in the portable device 12.

The camera image 50 shows the interior of the cabin 54 of the aircraft 14. One sees the lining 56 of the cabin 54, overhead bins 58, passenger seats 60, a shower 62, the cockpit door 64 and the floor 66 of the cabin 54.

In the overlay image 52, round buttons 68 (68a to 68f) are visible that are located at the position of the associated visible structure 56, 60, 62, 64, 66. The user of the portable device 12 may touch or activate the respective button 68 to command the device to show further virtual elements in the overlay image 52.

For example, the user may command the portable device 12 to show occluded structures of the aircraft 14, for example a model 70 of installations behind the lining 56 and/or a model 72 of the lavatory/shower 62 as indicated in Fig. 2. For example, with reference to Fig. 1, the occluded structures may comprise installations 74a, a cargo bay 74b, the tail 74c of the aircraft 14, a turbine 42, a lavatory 74d, a galley 74e, a shower 62, a baby changing table 74f and a cockpit 74g.

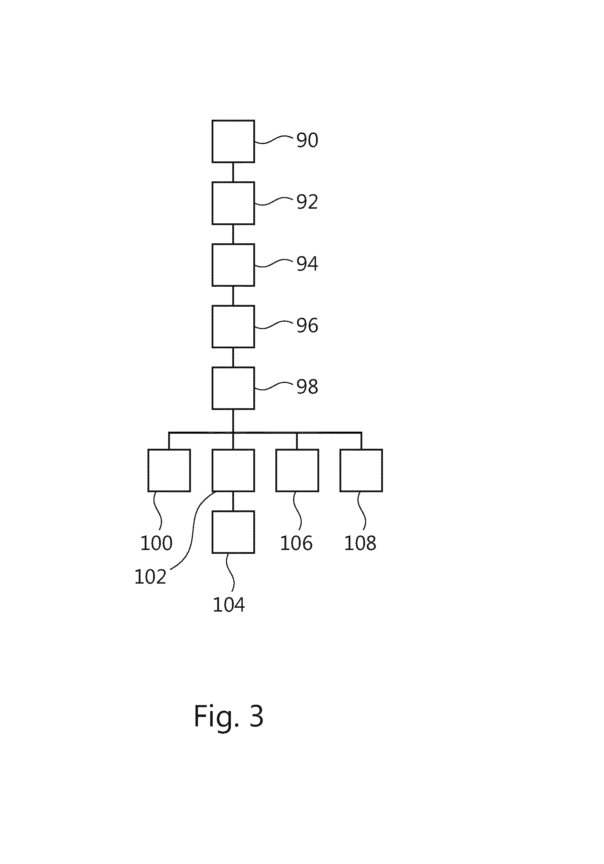

Fig. 3 shows a flow diagram for a method for displaying the augmented reality images 48 on the portable device 12.

In step 90, a passenger enters the aircraft and the portable device 12 connects with the wireless communication network 24. After that, the program ("app") for displaying the images 48 is loaded (automatically or after a confirmation of the passenger) from the database 34 into the portable device 12.

It is also possible that the program has been installed by the passenger before the flight, for example by downloading it from the Internet.

In step 92, the passenger arrives at his seat 60 and the portable device may calibrate its position relative to the aircraft 14. The portable device 12 may set a reference position based on the seat place 60, for example automatically by recognizing that the passenger has seated (does not move any more for a specific time) and by receiving the seat place position from the communication network. However, the calibration also may be mode manually.

In step 94, the passenger starts to use the program and moves the portable device 12 around. The camera 18 captures the camera image 50, which, for example, may show the interior of the cabin 54 as indicated in Fig. 2.

In step 96, the portable device 12 determines its relative position with respect to the aircraft 14. This may be performed with motion data from the motion sensor 26 motion data from the aircraft 14 and/or image data from the camera 18.

The motion data from the motion sensor 26 (for example acceleration data generated by an acceleration sensor and/or direction data generated by a gyroscope) may be used to determine the position (i.e. the location and the rotation) of the portable device 12 relative to the aircraft. For example, the motion data may be used to calculate an actual position based on the above mentioned reference position.

Additionally, the portable device 12 may receive motion data (for example acceleration data) from the aircraft 14 via the wireless communication network 24. This motion data may be used for considering motions induced by the aircraft 14 for determining the position of the portable device 12. For example, the accelerations generated by the aircraft 14 may be divided from the accelerations generated by the passenger.

Additionally, or alternatively, also the camera 18 of the portable device 12 may be used as a position/motion sensor. Specific spots 76 in the aircraft 14 may be indentified in the camera image 50 by the portable device 12. From the location, the orientation and/or data encoded in the spots 76, the portable device may determine its position relative to the aircraft 14. The spots 76, for example, may be two-dimensional bar codes.

In step 98, the portable device 12, based on its current position, determines which visible and occluded structures are present in the view of the camera 18 and generates and shows an overlay image 52 with buttons 68, which are located in the overlay image 52 near the respective structure shown in the camera image 50. With the buttons 68, the portable device presents the possibility to display one of the models 70, 72 by the portable device 12 and to activate further functions of the portable device that are associated with the structure near the button 68.

In step 100, the passenger may command the portable device to show a model 70, 72 of an occluded structure of the aircraft 14 behind a visible structure 56, 62. The portable device 12 then generates an overlay image 52 based on the position of the portable device 12, wherein the overlay image shows the model 70, 72 of the occluded structure associated with the aircraft 14, such that the model 70, 72 of the occluded structure is overlaying a visible structure 56, 62 of the aircraft 14 displayed in the camera image 50.

For example, when the passenger touches the button 68a, the portable device 12 downloads a model 70 of an installation 74a behind the lining 56 and shows the model 70 in the overlay image 52. The passenger may touch the button 68b and the portable device downloads a model 72 of the shower 62 and shows the model 72 in the overlay image 52.

It has to be noted that the models 70, 72 are three-dimensional models of the respective structure 74a, 62, which are moved and rotated such that they are displayed in the overlay image 52 overlaying a real position and orientation of the structure 74a, 62. In other words, the augmented reality image 48 may provide an X-ray view of the respective structure.

Other occluded structures that may be displayed with a model in such a way are the cargo bay 74b, the tail 74c of the aircraft 14, the turbine 42, the lavatory 74d, the galley 74e, the baby changing table 74f and the cockpit 74g.

In step 102, tags 78 may be added to the overlay image 52 by the portable device 12. The portable device may receive aircraft related data via the wireless communication network 24 and may add the aircraft related data as a tag near the model in the overlay image 52.

For example, the portable device may receive a flow rate of an air supply line of the installations 74a and may display the flow rate in a tag 78 near the model 70 of the installations 74a. Other technical data from the aircraft 14, which may be received from sensors 36 of the aircraft 14, may be acceleration data of the aircraft 14, speed data of the aircraft 14, altitude data of the aircraft 14, position data of the aircraft 14, a thrust of a turbine 42, a position of a rudder 74h, etc.

As a further example, the portable device 12 may receive an occupation status of the shower 78 from the lock sensor 40 and may display this status as a tag 78 in the form of a pictogram near the model 72 of the shower 72. Other data that may be relevant for the orientation of the passenger inside the cabin may be an occupation status of a lavatory 74d, an occupation status of a baby changing table 74f, servable meals of a galley 74e, etc.

In step 104, the tags 78 and/or the models 70, 72 may be used for activating further functions of the portable device 12.

For example, the passenger may reserve the shower 62. By touching the model 72 or the tag 78 near the model 72, the passenger may be directed to an application that may be used for reserving the shower and/or that may provide further information about the shower 62.

The passenger may order a meal and/or beverage. By touching a model of the galley 74e or a tag near the model, the passenger may be directed to an application that may be used for ordering meals and/or beverages. The available meals and beverages also may be displayed in a tag near the image of the galley 74e.

Buttons may be used to display camera images of on-board cameras. For example, the button 68d for the cockpit 74g may be used for displaying the images of a cockpit camera or of an outside camera in a tag.

In step 106, the passenger may display a map 80 with the portable device 12. For example, when touching the button 68c, a (for example three-dimensional) model 80 of the landscape below the aircraft 14 may be displayed. In this case, the portable device 12 may determine a position of the portable device 12 relative to the landscape outside the aircraft 14, for example by receiving position data from the aircraft 12. Interesting places on the map or model of the landscape 80 may be provided as tags.

In Fig. 2, the map or model of the landscape 80 is only shown schematically. The map and/or the model of the landscape 80 may be shown on the whole screen 16 and/or may be shown overplayed to the camera image 50. In the latter case, the camera image 50 may be made transparent to better show the map or model.

Additional buttons 68e, 68f for other functions may be shown on the screen 16, for example on the back of the seat 60 in front of the seat 60 of the passenger.

In step 108, additional functions may be executed by the portable device 12.

With a button 68e (e.g. located over the display in the back of the seat 60), the passenger may link into an in-flight entertainment system and may watch a movie with his portable device 12. The movie may be stored in the database 34.

With another button 68f (e.g. located over the repository in the back of the seat 60), reading material, safety instructions and/or books may be downloaded to the portable device 12. These documents also may be stored in the database 34.

The portable device 12 (i.e. the program run by the device) also may be able to display stored images instead of the camera image 50.

For example, when it is dark inside the cabin 54, the portable device may download images from the database 34 that fit (i.e. show the same or nearly the same view) to the actual position of the portable device 12 and may display these images instead or additional to the camera image 50. These images may show views of the interior of the cabin 54 that have been recorded before.

It is also possible that the user virtually moves through the aircraft 14 with the aid of the stored images. For example, the passenger may touch the button 82 to show a view in the back direction (opposite to the direction, the camera 18 is facing to). For example, when he is seating in his seat 60, he may view the galley 74e and/or the tail 74c with turning his body.

Returning back to Fig. 1, the portable device may include a control module 25 that is adapted for performing the above described method. The control module 25 may include a user interface and/or or screen control module (that controls the output of the display and receives user input), a tagging module (that generates the tags 78 for the images 48 based on image data 50 received through the user interface control module) and a device position module (that determines the position of the portable device 12 within the aircraft 14). The control module 25 may also include at least a flight data store (for providing information regarding the flight - geographic location, etc.), a component data store (for providing data regarding the particular aircraft structure and components) and a device data store (for storing the position of the device within the aircraft cabin for use during the flight).

As used herein, the term module refers to any hardware, software, firmware, electronic control component, processing logic, and/or processor device, individually or in any combination, including without limitation: application specific integrated circuit (ASIC), an electronic circuit, a processor (shared, dedicated, or group) and memory that executes one or more software or firmware programs, a combinational logic circuit, and/or other suitable components that provide the described functionality.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A method for displaying augmented reality images (48) on a portable device (12) in an aircraft (14), the method comprising the steps:
capturing a camera image (50) with a camera (18) of the portable device (12);
determining a position of the portable device (12) relative to the aircraft (14) based on a sensor (18, 26) of the portable device (12);
generating an overlay image (52) based on the position of the portable device (12), wherein the overlay image shows a model (70, 72, 80) of an occluded structure associated with the aircraft (14) and overlaying the camera image (50) with the overlay image (52), such that the model (70, 72, 80) of the occluded structure is overlaying a visible structure (56, 62) of the aircraft (14) displayed in the camera image (50);
displaying the camera image (50) with the overlay image (52) on a screen (16) of the portable device (12).

2. The method of claim 1,
wherein the model (70, 72, 80) of the occluded structure is moved and rotated such that it is displayed in the overlay image (52) overlaying a real position and orientation of the occluded structure.

3. The method of claim 1 or 2,
wherein the occluded structure is at least one of: an installation (74a) behind a lining (56), a cargo bay (74b), a tail (74c) of the aircraft, a turbine (42), a lavatory (74d), a galley (74e), a shower (62), a baby changing table (74f), a cockpit (74g), a rudder (74h), a landscape below the aircraft (12).

4. The method of one of the preceding claims, further comprising the step of:
determining a position of the portable device (12) relative to a landscape outside the aircraft (14);
wherein the displayed model of the occluded structure is a map or a model (80) of the landscape outside of the aircraft (12).

5. The method of one of the preceding claims, further comprising the steps of:
receiving aircraft related data via a wireless communication network (24) of the aircraft (14);
adding the aircraft related data as a tag (78) to the model in the overlay image (52).

6. The method of claim 5,
wherein the aircraft data comprises at least one of: acceleration data of the aircraft (14), speed data of the aircraft (14), altitude data of the aircraft (14), position data of the aircraft (14), a thrust of a turbine (42), a position of a rudder (74h); and/or
wherein the aircraft data comprises at least one of: an occupation status of a lavatory (74d), an occupation status of a baby changing table (74f), an occupation status of a shower (44), servable meals of a galley (74e).

7. The method of one of the preceding claims, further comprising the step of:
in the case, more than one model (70, 72) is displayable in the overlay image (52) by the portable device (12): presenting the possibility to display only one of the models (70, 72) by the portable device (12).

8. The method of one of the preceding claims, further comprising the steps of:
receiving motion data from the aircraft (14);
considering motions induced by the aircraft (14) for determining the position of the portable device (12).

9. The method of one of the preceding claims, further comprising the steps of:
setting a reference position of the portable device based on a seat place (60) of a person carrying the portable device (12);
determining following positions of the portable device (12) from motion data.

10. The method of one of the preceding claims, further comprising the step of:
identifying a specific spot (76) in the aircraft (14) from the camera image (50);
determining the position of the portable device (12) relative to the aircraft (14) based on the specific spot.

11. A computer program for displaying augmented reality images on a portable device (12) in an aircraft (14), which computer program, when being executed by a processor (23), is adapted to carry out the steps of the method of one of claims 1 to 10.

12. A computer-readable medium, in which a computer program according to claim 11 is stored.

13. A portable device (12) adapted for displaying augmented reality images (48) with the method of one of claims 1 to 11.

14. A system (10) comprising an aircraft (14) and a portable device (12) according to claim 13,
wherein the aircraft (14) comprises:
a wireless communication network (24),
a computer (32) for gathering aircraft related data from sensors (36, 38, 40) of the aircraft (14) and for sending the aircraft related data to the portable device (12) via the wireless communication network (24).

15. The system of claim 14,
wherein the computer (32) comprises a database (34) with models (70, 72) of structures associated with the aircraft (14).
